# EUROPEAN PATENT APPLICATION

(11) **EP 4 797 050 A1**
(43) Date of publication of application: **26.08.2026**
(21) Application number: 24878920.8
(22) Date of filing: 12.10.2024
(51) Int. Cl.: G06F 3/01, G06F 3/02, G06F 3/04817, G06F 1/16

(54) **INPUT METHOD AND APPARATUS, AND INTELLIGENT WEARABLE DEVICE AND STORAGE MEDIUM**

(30) Priority: 17.10.2023 CN 202311349512
(71) Applicant: Meta-Bounds Inc., Zhuhai, Guangdong 519000 (CN)
(72) Inventor: YU, Xuewen, Zhuhai, Guangdong 519000 (CN)
(74) Representative: Agca Kizil, Tugce
(86) International application number: PCT/CN2024/124443
(87) International publication number: WO 2025/082276

(57) **Abstract**

The embodiments of the present disclosure provide an input method, an input apparatus, an intelligent wearable device and a storage medium, relating to the technical field of intelligent wearable devices. The input method is applied to a smart wearable device and includes: responding to an input state trigger signal to enter an information input state, the smart wearable device has a first operation mode and a second operation mode in the information input state; obtaining a device state of a terminal device communicatively connected to the smart wearable device, and determining a target operation mode of the smart wearable device according to the device state, the target operation mode being either the first operation mode or the second operation mode. The problem that the intelligent wearable device obtains user input information is not flexible and fails to meet practical user needs is solved, the flexibility of the intelligent wearable device in obtaining information input is improved, convenience is provided for users, and user satisfaction is further enhanced.

## Description

### CROSS-REFERENCE TO RELATED APPLICATIONS

This application claims the priority to Chinese Patent Application No. 202311349512.4, entitled "Input Method, Input Apparatus, Smart Wearable Device and Storage Medium", and filed on October 17, 2023, which is incorporated herein by reference herein.

### TECHNICAL FIELD

The present disclosure relates to the technical field of smart wearable devices, and in particular to an input method, an input apparatus, a smart wearable device and a storage medium.

### BACKGROUND

With the continuous development of computer and vision technologies, virtual reality and augmented reality and other technologies are becoming research hot spots and technical challenges in the commercial and academic communities, and have a wide range of application scenarios.

Such as AR glasses can realize many functions, determine the state of the user by tracking the eye gaze trajectory, and can turn on corresponding functions. In the related art, the manner in which AR glasses obtain user input is not flexible enough and cannot support the actual needs of the user, in order to reduce user satisfaction.

### SUMMARY OF THE INVENTION

The purpose of the embodiments of the present disclosure is to provide an input method, an input apparatus, a smart wearable device and a storage medium, aiming to solve the prior art problem that the smart wearable device obtains user input information is not flexible and fails to meet practical user needs.

In a first aspect, the embodiments of the present disclosure provide an input method, including:
responding to an input state trigger signal to enter an information input state, where the smart wearable device has a first operation mode and a second operation mode in the information input state;
obtaining a device state of a terminal device communicatively connected to the smart wearable device, and determining a target operation mode of the smart wearable device according to the device state, the target operation mode being either the first operation mode or the second operation mode.

In a second aspect, the embodiments of the present disclosure provide an input apparatus, including:
an information response module, for responding to an input state trigger signal to enter an information input state, the smart wearable device has a first operation mode and a second operation mode in the information input state;
a mode confirmation module, for obtaining a device state of a terminal device communicatively connected to the smart wearable device, and determining a target operation mode of the smart wearable device according to the device state, the target operation mode being either the first operation mode or the second operation mode.

In a third aspect, the embodiments of the present disclosure provide a smart wearable device, in which the smart wearable device includes a processor and a memory; a computer program stored on the memory and executable by the processor, and a data bus for realizing connection communication between the processor and the memory, in which the computer program is executed by the processor to implement the steps of any one of the input methods provided in the description of the present disclosure.

In a fourth aspect, the embodiments of the present disclosure provide a computer readable storage medium, storing one or more programs that, when executed by one or more processors, cause the processors to perform the steps of any one of the input methods provided in the present disclosure.

The embodiments of the present disclosure provide an input method, an input apparatus, an intelligent wearable device and a storage medium. The input method is applied to an intelligent wearable device and includes: responding to an input state trigger signal to enter an information input state, the intelligent wearable device has a first operation mode and a second operation mode in the information input state; obtaining a device state of a terminal device communicatively connected to the intelligent wearable device, and determining a target operation mode of the intelligent wearable device according to the device state, the target operation mode being either the first operation mode or the second operation mode. Therefore, the manner in which the intelligent wearable device obtains input may be flexibly adjusted according to the device state of the terminal device. So that the user may adjust the device state corresponding to the terminal device according to actual needs, thereby determining the target operation mode of the intelligent wearable device as the operation mode expected by the user, which can improve adaptability to user requirements. Thereby solving the prior art problem that the intelligent wearable device obtains user input information is not flexible and fails to meet practical user needs, improving the flexibility of the intelligent wearable device in obtaining information input, providing convenience for the user to use the intelligent wearable device, thereby enhancing user satisfaction.

### BRIEF DESCRIPTION OF THE DRAWINGS

In order to more clearly illustrate the technical solutions of the embodiments of the present disclosure, the drawings may be used in the description of the embodiments are briefly introduced below. The drawings in the following description are some embodiments of the present disclosure. For those of ordinary skill in the art, other drawings may be obtained according to these drawings without creative effort.
FIG. 1 is a schematic flowchart of an input method provided by an embodiment of the present disclosure;
FIG. 2 is a schematic flowchart of sub-step S102 in the input method of FIG. 1;
FIG. 3 is a schematic diagram of a scene of an input method provided by an embodiment of the present disclosure;
FIG. 4 is a schematic diagram of a module structure of an input apparatus provided by an embodiment of the present disclosure;
FIG. 5 is a schematic block diagram of the structure of a smart wearable device provided by an embodiment of the present disclosure.

### DETAILED DESCRIPTION OF EMBODIMENTS

The technical solutions in the embodiments of the present disclosure will be clearly and completely described below with the drawings in the embodiments of the present disclosure. The described embodiments are some embodiments of the present disclosure, not all embodiments. The embodiments described herein are illustrative and do not limit the scope of the invention. Modifications and variations that would be obvious to a person of ordinary skill in the art based on the teachings herein are intended to fall within the scope of the present disclosure.

The flowcharts shown in the drawings are examples and need not to include all the content and operations/steps, nor do they have to be executed in the order described. In some embodiments, some operations/steps may be decomposed, combined or partially merged, so the actual execution order may change according to the actual situation.

It should be understood that the terms used in the description of the present disclosure herein are for the purpose of describing embodiments and are not intended to limit the present disclosure. As used in the description of the present disclosure and the appended claims, unless the context clearly indicates otherwise, the singular forms "a", "an" and "the" are intended to include the plural forms.

The embodiments of the present disclosure provide an input method, an input apparatus, a smart wearable device and a storage medium. The input method may be applied to a smart wearable device, and the smart wearable device may be an AR glasses.

In the related art, the input method application may be used to establish a Bluetooth connection with a handheld device such as a mobile phone, in order to receive text content sent by the handheld device such as a mobile phone, and then displaying it on the input control of the smart wearable device such as AR glasses, so that the smart wearable device such as AR glasses may realize user needs according to the text content in the input control.

However, in the related art the smart wearable device such as AR glasses may support input from a smart device such as a mobile phone, if no such device (e.g., a mobile phone) is available when the AR glasses require input, the input cannot be completed, which restricts the use of the smart wearable device such as AR glasses.

Therefore, there is an urgent need for an input method that enables the smart wearable device to flexibly obtain user input information.

The following embodiments of the present disclosure are described in detail with the drawings. In the case of no conflict, the features in the following embodiments and the embodiments may be combined with each other.

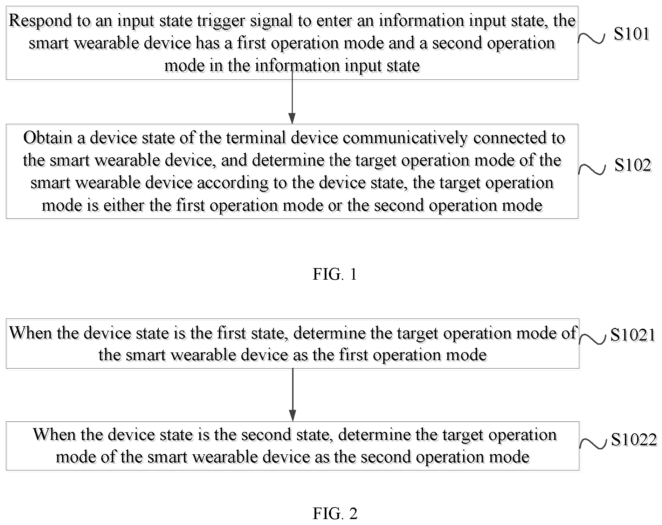

With reference to FIG. 1, FIG. 1 is a schematic flowchart of an input method provided by an embodiment of the present disclosure.

As shown in FIG. 1, the input method includes steps S101 to S102.

Step S101, responding to an input state trigger signal to enter an information input state, the smart wearable device has a first operation mode and a second operation mode in the information input state.

In some embodiments, after the information input button or information input interface of the smart wearable device is triggered, the smart wearable device sends an input state trigger signal and responds to the input state trigger signal to enter the information input state, the smart wearable device has a first operation mode and a second operation mode in the information input state, in which the information input manner of the smart wearable device is different in the first operation mode and in the second operation mode.

In some embodiments, the display interface corresponding to the smart wearable device has an information input box, when the target object selects the information input box, the smart wearable device sends an input state trigger signal and responds to the input state trigger signal to enter the information input state, the information input state is configured to characterize the situation in which the smart wearable device is in the information reception. The target object may be a user who selects the information input box through an input device such as a mouse or keyboard, or may refer to a trigger signal in which the user uses an input device such as a mouse or keyboard to trigger the information input box to be selected.

In some embodiments, the smart wearable device has different operation modes in the information input state, and different operation modes have different manners of obtaining information input, that is, when the smart wearable device receives information input, the subject that the user controls the information input is different, the subject may be the smart wearable device or the terminal device communicatively connected to the smart wearable device.

In some embodiments, the input method further includes: in the first operation mode, receiving first input information sent by the terminal device communicatively connected to the smart wearable device, and performing a first operation according to the first input information; in the second operation mode, obtaining second input information corresponding to the second input control of the smart wearable device, and performing a second operation according to the second input information.

In some embodiments, when the smart wearable device is in the first operation mode, the smart wearable device receives the first input information sent by the terminal device communicatively connected to the smart wearable device as one manner of information input of the smart wearable device. When the smart wearable device is in the second operation mode, the smart wearable device uses the second input control configured by the smart wearable device to obtain the corresponding second input information as another manner of information input of the smart wearable device.

In some embodiments, when the smart wearable device is in the first operation mode, the target object obtains the first input information by performing information input on the terminal device, and then sends the first input information to the smart wearable device, so that the smart wearable device obtains the first input information. When the smart wearable device is in the second operation mode, the target object generates the second input information by operating the second input control such as a virtual keyboard corresponding to the smart wearable device.

In some embodiments, the terminal device may be a terminal device communicatively connected to the smart wearable device, and the user obtains the first input information by performing information input on the terminal device, so that the terminal device sends the first input information to the smart wearable device, so that the smart wearable device obtains the first input information.

In some embodiments, when the smart wearable device obtains the first input information, the smart wearable device may perform the first operation matching the first input information according to the first input information; when the smart wearable device obtains the second input information, the smart wearable device may perform the second operation matching the second input information according to the second input information.

In some embodiments, the first input information is obtained by input on the terminal device communicatively connected to the smart wearable device, when the smart wearable device obtains the first input information, the first input information is displayed synchronously or asynchronously in the input box corresponding to the smart wearable device, and when the first input information is received, the matching first operation is performed according to the first input information. The second input information is obtained by the virtual keyboard of the smart wearable device, and may be displayed in real time in the input box corresponding to the smart wearable device, and when the second input information is received, the matching second operation is performed according to the second input information.

In some embodiments, the first input information and the second input information are instructions issued to the smart wearable device, when the smart wearable device receives the first input information or the second input information, it performs the first operation matching the first input information or the second operation matching the second input information.

In some embodiments, the text content corresponding to the first input information is to open the roller coaster virtual scene, then the smart wearable device will display the roller coaster virtual scene to allow the user to experience it. The text content corresponding to the second input information is to switch the roller coaster virtual scene to the drop tower virtual scene, then the smart wearable device will switch the roller coaster virtual scene to the drop tower virtual scene for display to allow the user to experience it. The first input information and the second input information may be the same instruction or different instructions, but the manner of obtaining the input information is different.

Step S102, obtaining a device state of the terminal device communicatively connected to the smart wearable device, and determining the target operation mode of the smart wearable device according to the device state, the target operation mode being either the first operation mode or the second operation mode.

In some embodiments, the smart wearable device is wirelessly connected to the terminal device, obtains the device state corresponding to the terminal device, and then determines the target operation mode of the smart wearable device according to the device state corresponding to the terminal device, the target operation mode being the first operation mode or the second operation mode. When the device state corresponding to the terminal device supports the operation mode of the smart wearable device as the first operation mode, then the target operation mode is set to the first operation mode; when the device state corresponding to the terminal device does not support the operation mode of the smart wearable device as the first operation mode, then the target operation mode is set to the second operation mode.

Before obtaining the device state of the terminal device communicatively connected to the smart wearable device, the smart wearable device sends a wireless communication request to the terminal device, the terminal device makes a response to the wireless communication request after receiving the wireless communication request to obtain a wireless communication response, and sends the wireless communication response to the smart wearable device, the smart wearable device receives the wireless communication response, and determines the wireless communication result according to the wireless communication response, and then makes the smart wearable device being wirelessly connected to the terminal device according to the wireless communication result.

In some embodiments, the wireless communication manner between the smart wearable device and the terminal device may be through Bluetooth, WiFi, etc., the manner is not specifically limited in the present disclosure, and may be selected according to actual needs.

In some embodiments, the device state includes a first state and a second state, in which the first state characterizes that the first input control of the terminal device is in a usable state, the second state characterizes that the first input control of the terminal device is in an unusable state, the determining the target operation mode of the smart wearable device according to the device state, with reference to FIG. 2, step S102 includes: sub-step S1021 to sub-step S1022.

Sub-step S1021, when the device state is the first state, determining the target operation mode of the smart wearable device as the first operation mode.

In some embodiments, the device state corresponding to the terminal device includes a first state and a second state, the first state characterizes that the first input control of the terminal device is in a usable state, the second state characterizes that the first input control of the terminal device is in an unusable state, the first input control is the information input manner corresponding to the terminal device, the first input control may be an input keyboard, mouse, touch screen, etc. The first input control may be built-in in the system of the terminal device, or may be configured by the terminal device for the smart wearable device.

In some embodiments, when the app program corresponding to the smart wearable device is installed in the terminal device, if the app program or the first input control (such as keyboard) corresponding to the app program in the terminal device is in a usable state at this time, then determine that the terminal device is in the first state; if the terminal device is operating other app programs at this time, causing the app program corresponding to the smart wearable device to be unusable, that is, the first input control of the app program corresponding to the smart wearable device is in an unusable state, then determine that the terminal device is in the second state.

In some embodiments, when the device state of the terminal device is the first state, it indicates that the terminal device may provide information input for the smart wearable device, and then confirm that the target operation mode corresponding to the smart wearable device is the first operation mode.

Sub-step S1022, when the device state is the second state, determining the target operation mode of the smart wearable device as the second operation mode.

In some embodiments, when the device state of the terminal device is the second state, it indicates that the terminal device cannot provide information input for the smart wearable device at this time, then if the smart wearable device needs to obtain information input at this time, it needs to use its own control to realize information input, and then determine that the target operation mode corresponding to the smart wearable device is the second operation mode.

It may be understood that determining the target operation mode of the smart wearable device according to the device state of the terminal device allows the user to select an input manner that is more beneficial to the user under the state of normal use of the terminal device, thereby providing a more efficient manner for the user.

In some embodiments, when the device state corresponding to the terminal device switches from the second state to the first state, the input method further includes: receiving an input query request sent by the terminal device; obtaining the current information input state corresponding to the smart wearable device according to the input query request; when the current information input state is a preset state, switching the target operation mode of the smart wearable device from the second operation mode to the first operation mode.

In some embodiments, when determining the target operation mode corresponding to the smart wearable device, it is related to the device state corresponding to the terminal device. If the target operation mode corresponding to the smart wearable device is the second operation mode, it indicates that the terminal device is in the second state. If the device state corresponding to the terminal device changes, switching from the second state to the first state, it indicates that the first input control corresponding to the terminal device switches from an unusable state to a usable state.

In some embodiments, determining whether the smart wearable device is in the information input state at this time. If the smart wearable device is in the information input state, the target operation mode corresponding to the smart wearable device may be switched from the second operation mode to the first operation mode; if the smart wearable device is not in the information input state, that is, the smart wearable device is in a non-information input state, then there is no need to process the target operation mode of the smart wearable device.

In some embodiments, the terminal device sends an input query request to the smart wearable device, the smart wearable device receives the input query request sent by the terminal device, and then the smart wearable device obtains the current information input state according to the input query request; when the current information input state is the preset state, then the target operation mode of the smart wearable device is switched from the second operation mode to the first operation mode, and then information input to the smart wearable device is realized through the terminal device. The preset state corresponds to the information input state.

In some embodiments, the app program matching the smart wearable device in the terminal device is in a running state, then the device state corresponding to the terminal device changes from the second state to the first state, and then the terminal device actively initiates an input query request to inquire whether the smart wearable device is in the information input state; when the current information input state is the information input state, the target operation mode of the smart wearable device is switched from the second operation mode to the first operation mode, and then information input to the smart wearable device is realized through the terminal device.

In some embodiments, switching the target operation mode of the smart wearable device from the second operation mode to the first operation mode may allow the user to obtain input information more clearly and efficiently through the terminal device, providing a better experience for the user. In some embodiments, the screen display corresponding to the terminal device is large, the user may display the input content very clearly, in addition, the input control of the terminal device has higher processing capability, which may better satisfy the diverse user requirements.

In some embodiments, after determining that the target operation mode of the smart wearable device is the first operation mode, the input method further includes: sending a control display command to the terminal device, so that the terminal device displays the first input control according to the control display command; receiving input information corresponding to the first input control, and displaying the input information in the target area corresponding to the smart wearable device.

In some embodiments, after determining that the target operation mode of the smart wearable device is the first operation mode, a control display command is sent to the terminal device, so that after receiving the control display command, the terminal device displays the corresponding first input control. Thereby, the target object operates the first input control to obtain input information, and then sends the input information to the smart wearable device, and after the smart wearable device receives the input information, the input information is displayed in the target area corresponding to the smart wearable device.

In some embodiments, the target area corresponding to the smart wearable device is the information input box, the first input control is the keyboard corresponding to the terminal device, after sending the control display command to the terminal device, the terminal device displays the keyboard, the target object operates in the keyboard to obtain input information, and then sends the input information to the smart wearable device, and then the smart wearable device displays the input information in the information input box after receiving the input information.

In some embodiments, the manner in which the input information is displayed in the target area corresponding to the smart wearable device may be displayed in real time with the terminal device, or may be displayed in full after the input operation on the terminal device is completed. The present disclosure does not make limitations, and may be selected according to needs.

In some embodiments, when the smart wearable device is in the first operation mode, a control display command is sent to the terminal device, so that the terminal device displays the first input control according to the control display command. The user may directly perform information input in the first input control, which may make the user operation more convenient, save the time for the user to find the first input control in the terminal device, and be more efficient and fast.

In some embodiments, after determining that the target operation mode of the smart wearable device is the second operation mode, the input method further includes: displaying the second input control corresponding to the smart wearable device, and receiving input information corresponding to the second input control; displaying the input information in the target area corresponding to the smart wearable device.

In some embodiments, after determining that the target operation mode of the smart wearable device is the second operation mode, it indicates that the information input of the smart wearable device needs to be obtained according to the input information generated by the target object triggering the second input control corresponding to the smart wearable device, then after determining that the target operation mode of the smart wearable device is the second operation mode, the second input control corresponding to the smart wearable device is displayed, so that the user may perform information input according to the second input control, thereby obtaining the corresponding input information, and displaying the input information in the target area corresponding to the smart wearable device.

In some embodiments, the second input control is a keyboard, then the user converts the operation on the smart wearable device to the operation on the second input control, thereby obtaining the corresponding input information, and displaying the input information in the target area corresponding to the smart wearable device in real time.

In some embodiments, when the smart wearable device is in the second operation mode, the second input control corresponding to the smart wearable device is displayed to obtain information input according to the second input control. Displaying the second input control saves the time for the user to perform operations in the smart wearable device to obtain the second input control, improving user convenience.

In some embodiments, after switching the target operation mode of the smart wearable device from the second operation mode to the first operation mode, the input method further includes: hiding the second input control corresponding to the smart wearable device, and sending a control display command to the terminal device, so that the terminal device displays the first input control according to the control display command; receiving input information corresponding to the first input control, and displaying the input information in the target area corresponding to the smart wearable device.

In some embodiments, after the target operation mode of the smart wearable device is switched from the second operation mode to the first operation mode, it indicates that the smart wearable device is converted from the input information generated by the target object triggering the smart wearable device to receiving the input information sent by the terminal device. Then the second input control corresponding to the smart wearable device is hidden, and a control display command is sent to the terminal device, so that the terminal device displays the first input control according to the control display command, and then receives the input information obtained by the target object operating the first input control, and displays the input information in the target area corresponding to the smart wearable device.

In some embodiments, after the target operation mode of the smart wearable device is switched from the second operation mode to the first operation mode, the second input control corresponding to the smart wearable device is retracted, and a control display command is sent to the terminal device, then the terminal device displays the first input control according to the control display command, and then receives the input information obtained by the target object operating the first input control, and displays the input information in the target area corresponding to the smart wearable device in real time.

In some embodiments, when the smart wearable device switches from the second operation mode to the first operation mode, the second input control corresponding to the smart wearable device is automatically retracted, and a control display command is sent to the terminal device, then the terminal device displays the first input control according to the control display command, reducing the operation steps of the user in the smart wearable device and the terminal device, saving the time for inputting information, and improving user convenience.

In some embodiments, during the process of obtaining the input information corresponding to the target operation mode, after detecting the input completion instruction corresponding to the smart wearable device, the input method further includes: obtaining a control operation command and a target input control according to the target operation mode and the input completion instruction; performing the target operation for the control operation command according to the target input control.

In some embodiments, the smart wearable device obtains the input information in the corresponding input manner according to the target operation mode, in this process, if the input information input is completed, the input completion button is triggered, and then the smart wearable device detects the input completion instruction, then it indicates that the target object has completed the information input to the smart wearable device, thereby obtaining the control operation command and the target input control matching the target operation mode according to the target operation mode corresponding to the smart wearable device and the input completion instruction, and performing the target operation for the control operation command according to the target input control.

In some embodiments, when the target operation mode corresponding to the smart wearable device is the first operation mode, the smart wearable device receives the input information corresponding to the first input control of the terminal device, when the input completion button corresponding to the first input control is triggered, the smart wearable device detects the input completion instruction, then obtains that the target operation mode is the first operation mode, the corresponding target input control is the first input control, and the control operation command is sent to the terminal device so that the terminal device performs the retract operation on the first input control.

When the target operation mode corresponding to the smart wearable device is the second operation mode, the smart wearable device obtains the input information corresponding to the second input control of the smart wearable device, when the input completion instruction corresponding to the second input control is triggered, the smart wearable device detects the input completion instruction, then obtains that the target operation mode is the second operation mode, the corresponding target input control is the second input control, and the control operation command is to cause the second input control to perform the retract operation.

In some embodiments, when the smart wearable device detects the input completion instruction, it obtains the control operation command and the target input control matching the target operation mode and then performs the corresponding operation. Communication overhead may be reduced, and the input content may be checked to ensure the accuracy of the input information, in order to reduce operation risks and providing a better interactive experience.

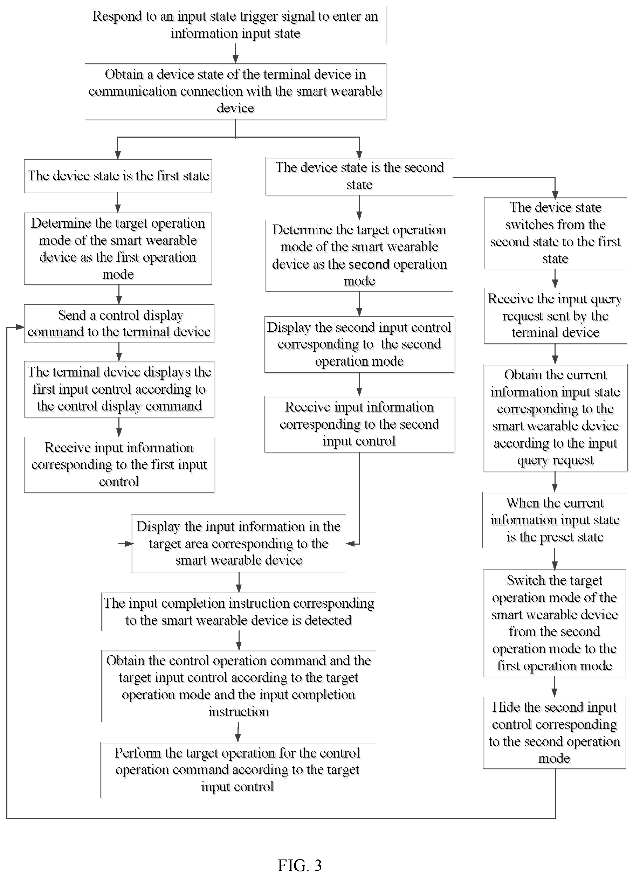

With reference to FIG. 3, FIG. 3 is a schematic diagram of a scene of an input method provided by an embodiment of the present disclosure. As shown in Figure 3, the input method includes: responding to an input state trigger signal to enter an information input state, obtaining the device state of the terminal device communicatively connected to the smart wearable device, when the device state is the first state, determining the target operation mode of the smart wearable device as the first operation mode; when the device state is the second state, determining the target operation mode of the smart wearable device as the second operation mode; after determining that the target operation mode of the smart wearable device is the first operation mode, sending a control display command to the terminal device, so that the terminal device displays the first input control according to the control display command, and then receiving input information corresponding to the first input control, and displaying the input information in the target area corresponding to the smart wearable device; after determining that the target operation mode of the smart wearable device is the second operation mode, displaying the second input control corresponding to the second operation mode, and receiving input information corresponding to the second input control, displaying the input information in the target area corresponding to the smart wearable device. The input method further includes: when the device state corresponding to the terminal device switches from the second state to the first state, receiving the input query request sent by the terminal device; obtaining the current information input state corresponding to the smart wearable device according to the input query request; when the current information input state is the preset state, switching the target operation mode of the smart wearable device from the second operation mode to the first operation mode, and then hiding the second input control corresponding to the second operation mode, and sending a control display command to the terminal device, so that the terminal device displays the first input control according to the control display command; receiving input information corresponding to the first input control, and displaying the input information in the target area corresponding to the smart wearable device. The input method further includes: when the input completion instruction corresponding to the smart wearable device is detected, obtaining the control operation command and the target input control according to the target operation mode and the input completion instruction, and then performing the target operation for the control operation command according to the target input control. The input method can solve the prior art problem that the smart wearable device obtains user input information is not flexible and fails to meet practical user needs, reducing user satisfaction. By obtaining the device state of the terminal device communicatively connected to the smart wearable device, and determining the target operation mode of the smart wearable device according to the device state, the flexibility of the smart wearable device in obtaining information input is improved, convenience is provided for the user to use the smart wearable device, in order to enhance user satisfaction.

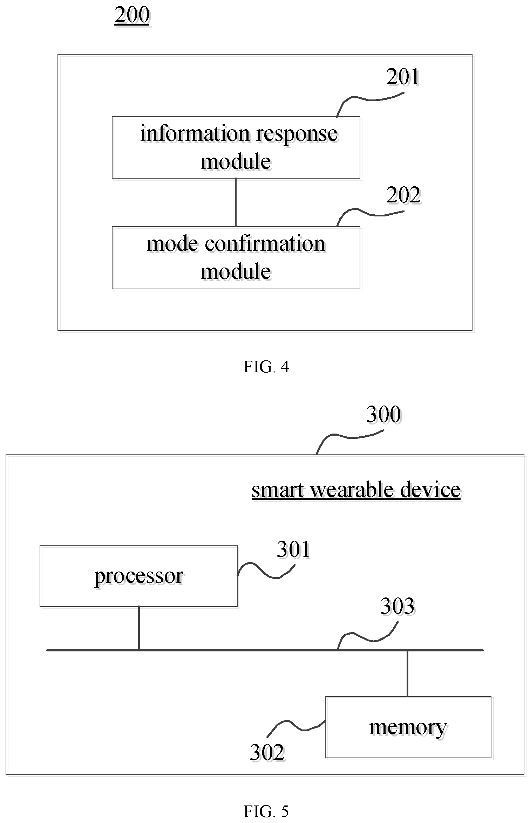

With reference to FIG. 4, Figure 4 is a schematic diagram of a module structure of an input apparatus 200 provided by an embodiment of the present disclosure. The input apparatus 200 includes an information response module 201 and a mode confirmation module 202, in which the information response module 201 is configured to respond to an input state trigger signal to enter an information input state, the smart wearable device has a first operation mode and a second operation mode in the information input state; the mode confirmation module 202 is configured to obtain a device state of a terminal device communicatively connected to the smart wearable device, and determine a target operation mode of the smart wearable device according to the device state, the target operation mode being either the first operation mode or the second operation mode.

In some embodiments, the input apparatus 200 is configured to:
in the first operation mode, receive first input information sent by the terminal device communicatively connected to the smart wearable device, and perform a first operation according to the first input information;
in the second operation mode, obtain second input information corresponding to a second input control of the smart wearable device, and perform a second operation according to the second input information.

In some embodiments, the device state includes a first state and a second state, in which the first state characterizes that the first input control of the terminal device is in a usable state, the second state characterizes that the first input control of the terminal device is in an unusable state;
the determining the target operation mode of the smart wearable device according to the device state includes:
when the device state is the first state, determining the target operation mode of the smart wearable device as the first operation mode;
when the device state is the second state, determining the target operation mode of the smart wearable device as the second operation mode.

In some embodiments, when the device state corresponding to the terminal device switches from the second state to the first state, the input apparatus 200 is further configured to:
receive an input query request sent by the terminal device;
obtain the current information input state corresponding to the smart wearable device according to the input query request;
when the current information input state is a preset state, switch the target operation mode of the smart wearable device from the second operation mode to the first operation mode.

In some embodiments, after determining that the target operation mode of the smart wearable device is the first operation mode, the input apparatus 200 is further configured to:
send a control display command to the terminal device, so that the terminal device displays the first input control according to the control display command;
receive input information corresponding to the first input control, and display the input information in the target area corresponding to the smart wearable device.

In some embodiments, after switching the target operation mode of the smart wearable device from the second operation mode to the first operation mode, the input apparatus 200 is further configured to:
hide the second input control corresponding to the smart wearable device, and send a control display command to the terminal device, so that the terminal device displays the first input control according to the control display command;
receive input information corresponding to the first input control, and display the input information in the target area corresponding to the smart wearable device.

In some embodiments, during the process of obtaining the input information corresponding to the target operation mode, after detecting the input completion instruction corresponding to the smart wearable device, the input apparatus 200 is further configured to:
obtain a control operation command and a target input control according to the target operation mode and the input completion instruction;
cause the target input control to perform the target operation for the control operation command.

It should be noted that those skilled in the art can clearly understand that, for the convenience and brevity of description, the working process of the input apparatus described above can refer to the corresponding process in the foregoing input method embodiment, and will not be repeated here.

With reference to FIG. 5, Figure 5 is a schematic block diagram of the structure of a smart wearable device provided by an embodiment of the present disclosure.

As shown in Figure 5, the smart wearable device 300 includes a processor 301 and a memory 302, the processor 301 and the memory 302 are connected through a bus 303, the bus 303 may be an I2C (Inter-integrated Circuit) bus.

In some embodiments, the processor 301 is configured to provide computing and control capabilities and support the operation of the entire smart wearable device. The processor 301 may be a central processing unit (CPU), and the processor 301 may be other general processors, digital signal processors (DSP), application specific integrated circuits (ASIC), field programmable gate arrays (FPGA) or other programmable logic devices, discrete gates or transistor logic devices, discrete hardware components, etc. The general processor may be a microprocessor or the processor may be any conventional processor, etc.

In some embodiments, the memory 302 may be a Flash chip, Read-only Memory (ROM), disk, optical disk, U disk or mobile hard disk, etc.

Those skilled in the art can understand that the structure shown in Figure 5 is a block diagram of part of the structure related to the solution of the embodiments of the present disclosure, and does not constitute a limitation on the smart wearable device to which the solution of the embodiments of the present disclosure is applied. The server may include more or fewer components than shown in the figure, or combine some components, or have different component arrangements.

In some embodiments, the processor is configured to run the computer program stored in the memory, and when executing the computer program, perform any one of the input methods provided by the embodiments of the present disclosure.

In one embodiment, the processor is configured to run the computer program stored in the memory, and when executing the computer program, perform the following steps:
responding to an input state trigger signal to enter an information input state, the smart wearable device has a first operation mode and a second operation mode in the information input state;
obtaining a device state of a terminal device communicatively connected to the smart wearable device, and determining a target operation mode of the smart wearable device according to the device state, the target operation mode being either the first operation mode or the second operation mode.

In some embodiments, the processor 301 further performs:
in the first operation mode, receiving first input information sent by the terminal device communicatively connected to the smart wearable device, and performing a first operation according to the first input information;
in the second operation mode, obtaining second input information corresponding to a second input control of the smart wearable device, and performing a second operation according to the second input information.

In some embodiments, the device state includes a first state and a second state, in which the first state characterizes that the first input control of the terminal device is in a usable state, the second state characterizes that the first input control of the terminal device is in an unusable state;
during the process of determining the target operation mode of the smart wearable device according to the device state, the processor 301 performs:
when the device state is the first state, determining the target operation mode of the smart wearable device as the first operation mode;
when the device state is the second state, determining the target operation mode of the smart wearable device as the second operation mode.

In some embodiments, when the device state corresponding to the terminal device switches from the second state to the first state, the processor 301 further performs:
receiving an input query request sent by the terminal device;
obtaining the current information input state corresponding to the smart wearable device according to the input query request;
when the current information input state is a preset state, switching the target operation mode of the smart wearable device from the second operation mode to the first operation mode.

In some embodiments, after determining that the target operation mode of the smart wearable device is the first operation mode, the processor 301 further performs:
sending a control display command to the terminal device, so that the terminal device displays the first input control according to the control display command;
receiving input information corresponding to the first input control, and displaying the input information in the target area corresponding to the smart wearable device.

In some embodiments, after switching the target operation mode of the smart wearable device from the second operation mode to the first operation mode, the processor 301 further performs:
hiding the second input control corresponding to the smart wearable device, and sending a control display command to the terminal device, so that the terminal device displays the first input control according to the control display command;
receiving input information corresponding to the first input control, and displaying the input information in the target area corresponding to the smart wearable device.

In some embodiments, during the process of obtaining the input information corresponding to the target operation mode, after detecting the input completion instruction corresponding to the smart wearable device, the processor 301 further performs:
obtaining a control operation command and a target input control according to the target operation mode and the input completion instruction;
performing the target operation for the control operation command according to the target input control.

It should be noted that those skilled in the art can clearly understand that, for the convenience and brevity of description, the working process of the smart wearable device described above can refer to the corresponding process in the foregoing input method embodiment, and will not be repeated here.

The embodiments of the present disclosure also provide a computer readable storage medium, the computer readable storage medium stores one or more programs, the one or more programs may be executed by one or more processors to perform the steps of any one of the input methods provided in the description of the embodiments of the present disclosure.

The storage medium may be the internal storage unit of the smart wearable device described in the foregoing embodiments, such as the hard disk or memory of the smart wearable device. The storage medium may be an external storage device of the smart wearable device, such as a plug-in hard disk equipped on the smart wearable device, a Smart Media Card, (SMC), a Secure Digital, (SD) card, a Flash Card, etc.

Those of ordinary skill in the art can understand that all or some of the steps in the input methods disclosed above, the functional modules/units in the systems and apparatuses may be implemented as software, firmware, hardware and appropriate combinations thereof. In hardware embodiments, the division of functional modules/units in the above description does not necessarily correspond to the division of physical components. In some embodiments, one physical component may have multiple functions, or one function or step may be executed by several physical components in cooperation. Some physical components or all physical components may be implemented as software executed by a processor, such as a central processor, digital signal processor or microprocessor, or as hardware, or as an integrated circuit, such as an application specific integrated circuit. Such software may be distributed on a computer readable medium, and the computer readable medium may include computer storage media (or non-transitory media) and communication media (or transitory media). As is well known to those of ordinary skill in the art, the term computer storage medium includes volatile and non-volatile, removable and non-removable media implemented in any method or technology for storing information (such as computer readable instructions, data structures, program modules or other data). Computer storage media include but are not limited to RAM, ROM, EEPROM, flash memory or other memory technologies, CD-ROM, digital versatile disks (DVD) or other optical disk storage, magnetic cassettes, magnetic tape, magnetic disk storage or other magnetic storage devices, or any other medium that may be used to store the desired information and may be accessed by a computer. In addition, it is well known to those of ordinary skill in the art that communication media usually contain computer readable instructions, data structures, program modules or other data in modulated data signals such as carrier waves or other transmission mechanisms, and may include any information delivery medium.

It should be understood that the term "and/or" used in the description of the present disclosure and the appended claims refers to any combination and all possible combinations of one or more of the associated listed items, and includes these combinations. It should be noted that in this document, the term "include", "comprise" or any other variant thereof is intended to cover non-exclusive inclusion, so that a process, method, article or system including a series of elements not only includes those elements, but also includes other elements not explicitly listed, or also includes elements inherent to such process, method, article or system. In the absence of more limitations, an element defined by the statement "include one..." does not exclude the existence of other identical elements in the process, method, article or system including the element.

The serial numbers of the embodiments of the present disclosure above are for description and do not represent the superiority or inferiority of the embodiments. The foregoing sets forth embodiments of the present disclosure, the scope of protection of the present disclosure is not limited thereto. Any person skilled in the art can easily think of various equivalent modifications or replacements within the technical scope disclosed in the present disclosure, and these modifications or replacements should be covered within the protection scope of the present disclosure. Therefore, the protection scope of the present disclosure should be based on the protection scope of the claims.

## Claims

1. An input method, applied to a smart wearable device, the input method comprising:
responding to an input state trigger signal to enter an information input state, wherein the smart wearable device has a first operation mode and a second operation mode in the information input state;
obtaining a device state of a terminal device communicatively connected to the smart wearable device, and determining a target operation mode of the smart wearable device according to the device state, the target operation mode being either the first operation mode or the second operation mode.

2. The input method of claim 1, further comprising:
in the first operation mode, receiving first input information sent by the terminal device communicatively connected to the smart wearable device, and performing a first operation according to the first input information;
in the second operation mode, obtaining second input information corresponding to a second input control of the smart wearable device, and performing a second operation according to the second input information.

3. The input method of claim 1, wherein the device state comprises a first state and a second state; the first state characterizes that the first input control of the terminal device is in a usable state, the second state characterizes that the first input control of the terminal device is in an unusable state;
the determining the target operation mode of the smart wearable device according to the device state comprises:
when the device state is the first state, determining the target operation mode of the smart wearable device as the first operation mode;
when the device state is the second state, determining the target operation mode of the smart wearable device as the second operation mode.

4. The input method of claim 3, wherein when the device state of the terminal device switches from the second state to the first state, the input method further comprises:
receiving an input query request sent by the terminal device;
obtaining a current information input state corresponding to the smart wearable device according to the input query request;
when the current information input state is a preset state, switching the target operation mode of the smart wearable device from the second operation mode to the first operation mode.

5. The input method of claim 3, wherein after determining the target operation mode of the smart wearable device as the first operation mode, the input method further comprises:
sending a control display command to the terminal device, wherein the terminal device displays the first input control according to the control display command;
receiving input information corresponding to the first input control, and displaying the input information in a target area corresponding to the smart wearable device.

6. The input method of claim 4, wherein after switching the target operation mode of the smart wearable device from the second operation mode to the first operation mode, the input method further comprises:
hiding the second input control corresponding to the smart wearable device, and sending a control display command to the terminal device, so that the terminal device displays the first input control according to the control display command;
receiving input information corresponding to the first input control, and displaying the input information in a target area corresponding to the smart wearable device.

7. The input method of claim 1, wherein during a process of obtaining input information corresponding to the target operation mode, after detecting an input completion instruction of the smart wearable device, the input method further comprises: obtaining a control operation command and a target input control according to the target operation mode and the input completion instruction;
performing a target operation corresponding to the control operation command according to the target input control.

8. An input apparatus, wherein the input apparatus comprises:
an information response module, for responding to an input state trigger signal to enter an information input state, the smart wearable device has a first operation mode and a second operation mode in the information input state;
a mode confirmation module, for obtaining a device state of a terminal device communicatively connected to the smart wearable device, and determining a target operation mode of the smart wearable device according to the device state, the target operation mode being either the first operation mode or the second operation mode.

9. The input apparatus of claim 8, wherein the input apparatus is configured to:
in the first operation mode, receive first input information sent by the terminal device communicatively connected to the smart wearable device, and perform a first operation according to the first input information;
in the second operation mode, obtain second input information corresponding to a second input control of the smart wearable device, and perform a second operation according to the second input information.

10. The input apparatus of claim 8, wherein the device state comprises a first state and a second state, wherein the first state characterizes that the first input control of the terminal device is in a usable state, the second state characterizes that the first input control of the terminal device is in an unusable state;
the determining the target operation mode of the smart wearable device according to the device state comprises:
when the device state is the first state, determining the target operation mode of the smart wearable device as the first operation mode;
when the device state is the second state, determining the target operation mode of the smart wearable device as the second operation mode.

11. The input apparatus of claim 10, wherein when the device state of the terminal device switches from the second state to the first state, the input apparatus is further configured to:
receive an input query request sent by the terminal device;
obtain a current information input state corresponding to the smart wearable device according to the input query request;
when the current information input state is a preset state, switch the target operation mode of the smart wearable device from the second operation mode to the first operation mode.

12. The input apparatus of claim 10, wherein after determining the target operation mode of the smart wearable device as the first operation mode, the input apparatus is further configured to:
send a control display command to the terminal device, so that the terminal device displays the first input control according to the control display command;
receive input information corresponding to the first input control, and display the input information in a target area corresponding to the smart wearable device.

13. The input apparatus of claim 11, wherein after switching the target operation mode of the smart wearable device from the second operation mode to the first operation mode, the input apparatus is further configured to:
hide the second input control corresponding to the smart wearable device, and send a control display command to the terminal device, so that the terminal device displays the first input control according to the control display command;
receive input information corresponding to the first input control, and display the input information in a target area corresponding to the smart wearable device.

14. An smart wearable device, wherein the smart wearable device comprises a processor and a memory;
the memory is configured to store a computer program;
the processor is configured to execute the computer program;
the computer program, when executed by the processor, causes the processor to execute operations of:
responding to an input state trigger signal to enter an information input state, the smart wearable device has a first operation mode and a second operation mode in the information input state;
obtaining a device state of a terminal device communicatively connected to the smart wearable device, and determining a target operation mode of the smart wearable device according to the device state, the target operation mode being either the first operation mode or the second operation mode.

15. The smart wearable device of claim 14, wherein the computer program, when executed by the processor, further causes the processor to execute operations of:
in the first operation mode, receiving first input information sent by the terminal device communicatively connected to the smart wearable device, and performing a first operation according to the first input information;
in the second operation mode, obtaining second input information corresponding to a second input control of the smart wearable device, and performing a second operation according to the second input information.

16. The smart wearable device of claim 14, wherein the device state comprises a first state and a second state, wherein the first state characterizes that the first input control of the terminal device is in a usable state, the second state characterizes that the first input control of the terminal device is in an unusable state;
the determining the target operation mode of the smart wearable device according to the device state comprises:
when the device state is the first state, determining the target operation mode of the smart wearable device as the first operation mode;
when the device state is the second state, determining the target operation mode of the smart wearable device as the second operation mode.

17. The smart wearable device of claim 16, wherein the computer program, when executed by the processor, further causes the processor to execute operations of:
receiving an input query request sent by the terminal device;
obtaining a current information input state corresponding to the smart wearable device according to the input query request;
when the current information input state is a preset state, switching the target operation mode of the smart wearable device from the second operation mode to the first operation mode.

18. The smart wearable device of claim 16, wherein the computer program, when executed by the processor, further causes the processor to execute operations of:
sending a control display command to the terminal device, so that the terminal device displays the first input control according to the control display command;
receiving input information corresponding to the first input control, and displaying the input information in a target area corresponding to the smart wearable device.

19. The smart wearable device of claim 17, wherein the computer program, when executed by the processor, further causes the processor to execute operations of:
hiding the second input control corresponding to the smart wearable device, and sending a control display command to the terminal device, so that the terminal device displays the first input control according to the control display command;
receiving input information corresponding to the first input control, and displaying the input information in a target area corresponding to the smart wearable device.

20. A computer readable storage medium, storing one or more programs that, when executed by one or more processors, cause the processors to perform the steps of the input method of any one of claims 1 to 7.
